# EUROPEAN PATENT APPLICATION

(11) **EP 4 516 644 A1**
(43) Date of publication of application: **05.03.2025**
(21) Application number: 22938755.0
(22) Date of filing: 27.04.2022
(51) Int. Cl.: B62D 25/08, B62D 25/20

(54) **VEHICLE BODY STRUCTURE**

(71) Applicant: NISSAN MOTOR CO., LTD., Kanagawa 221-0023 (JP)
(72) Inventor: TACHIKAWA, Takeshi, Atsugi-shi, Kanagawa 243-0123 (JP); MAKINO, Takanori, Atsugi-shi, Kanagawa 243-0123 (JP); TAKEZOE, Ryo, Atsugi-shi, Kanagawa 243-0123 (JP); SUZUKI, Youhei, Atsugi-shi, Kanagawa 243-0123 (JP); KUDOU, Daisuke, Atsugi-shi, Kanagawa 243-0123 (JP); OKUNO, Shota, Atsugi-shi, Kanagawa 243-0123 (JP)
(74) Representative: Osha BWB
(86) International application number: PCT/JP2022/019149
(87) International publication number: WO 2023/209889

(57) **Abstract**

A vehicle body structure including a side member (2) having a closed cross-section, a hood ridge member (4) having a closed cross-section, and a joint member (5) extending downward from a front end of the hood ridge member (4) and having a closed cross-section. The side member (2) includes a front section (2a) having a constant first horizontal width, a rear section (2c) having a second horizontal width smaller than the first horizontal width, and a transitional section (2b) that is provided between the front section and the rear section and whose horizontal width gradually changes from the first horizontal width to the second horizontal width. An inclined face (2g) is formed on an outer side face of the transitional section (2b), and a front end of the joint member (5) is joined to the side member (2) at the inclined face (2g).

## Description

### TECHNICAL FIELD

The present invention relates to a vehicle body structure.

### BACKGROUND ART

There is a demand for an effective vehicle body structure for a small overlap collision (also referred to as a small offset collision) that is a collision type in which an impact force is input to a front corner of a vehicle. A Patent Literature 1 listed below discloses a front section structure of a vehicle body, which takes a small overlap collision into account. The front section structure of a vehicle body disclosed in the Patent Literature 1 includes a side member whose end is extended laterally, a hood ridge member extended forward above the side member, and a joint member extended diagonally downward from a front end of the hood ridge member.

Note that the above-mentioned side member is referred to as a side frame in the Patent Literature 1. The hood ridge member and the joint member mentioned above are together referred to as a side member in the Patent Literature 1. In addition, the hood ridge member and the joint member are also referred to as an upper member and a lower member (of the side member) respectively in the Patent Literature 1.

A front end of the side member and a front end of the joint member are located side by side, and a crash box is disposed in front of them. A bumper reinforcement is attached to a front end of the crash box. An impact load in a small overlap collision is input to both the side member and the joint member via the crash box and is transmitted through two load paths. The side member and the joint member not only transmit the impact load, but also absorb a collision energy through their own collapsing while transmitting the impact load.

### CITATION LIST

### PATENT LITERATURE

Patent Literature 1: Japanese Patent Application Publication No. 2017-100555

### SUMMARY OF INVENTION

### PROBLEM TO BE SOLVED

In the front section structure of a vehicle body disclosed in the Patent Literature 1, the laterally-expanded front end of the side member and the front end of the joint member are arranged side by side. As a result, it is concerned that the impact load in a small overlap collision is not properly input to both the side member and the joint member and thus the two load paths don't function effectively. Therefore, an object of the present invention is to provide a vehicle body structure that can properly divaricate an impact load, and thus can effectively compete with the impact load through two load paths.

### SOLUTION TO PROBLEM

A vehicle body structure according to an aspect of the present invention includes a side member having a closed cross-section, a hood ridge member having a closed cross-section, and a joint member extending downward from a front end of the hood ridge member and having a closed cross-section. The side member includes a front section having a constant first horizontal width, a rear section having a second horizontal width smaller than the first horizontal width, and a transitional section that is provided between the front section and the rear section and whose horizontal width gradually changes from the first horizontal width to the second horizontal width. An inclined face is formed on an outer side face of the transitional section, and a front end of the joint member is joined to the side member at the inclined face.

### ADVANTAGEOUS EFFECTS

According to the aspect, an impact load can be divaricated properly to the side member and the joint member to compete with the impact load effectively through two load paths.

### BRIEF DESCRIPTION OF DRAWINGS

[FIG. 1] Fig. 1 is a perspective view of a vehicle body structure according to an embodiment.
[FIG. 2] Fig. 2 is a partially-enlarged perspective view of the vehicle body structure.
[FIG. 3] Fig. 3 is an enlarged exploded perspective view of the vehicle body structure.
[FIG. 4] Fig. 4 is a bottom view of the vehicle body structure.
[FIG. 5] Fig. 5 is a perspective bottom view of the vehicle body structure.
[FIG. 6] Fig. 6 is a cross-sectional view taken along a line VI-VI shown in Fig. 5.

### DESCRIPTION OF EMBODIMENTS

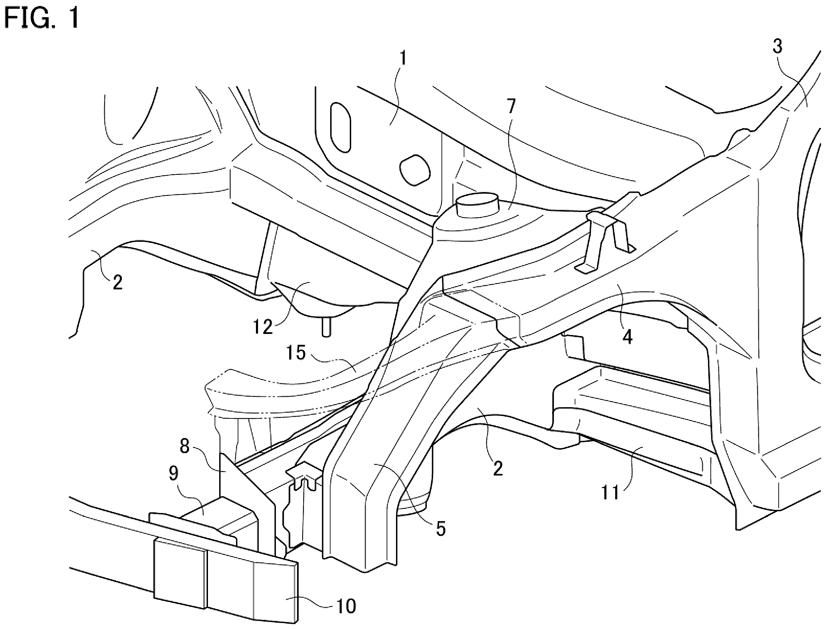

Hereinafter, a vehicle body structure according to an embodiment will be described with reference to the drawings. The vehicle body structure in the present embodiment is constructed symmetrically on left and right sides of the vehicle body. Therefore, the structure on the left side will be explained as an example below. First, a front section structure of the vehicle body in the present embodiment will be explained with reference to Figs. 1 through 4. The vehicle of the present embodiment is a hybrid electric vehicle (HEV), and the front section of the vehicle body has a motor compartment that houses an internal combustion engine and a motor-generator that are provided for generating electrical power, and another motor-generator for driving the vehicle.

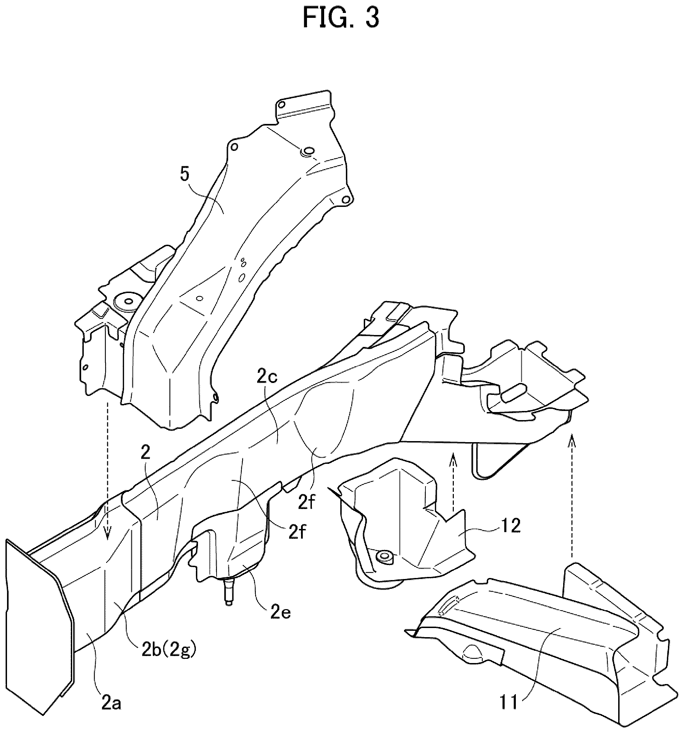

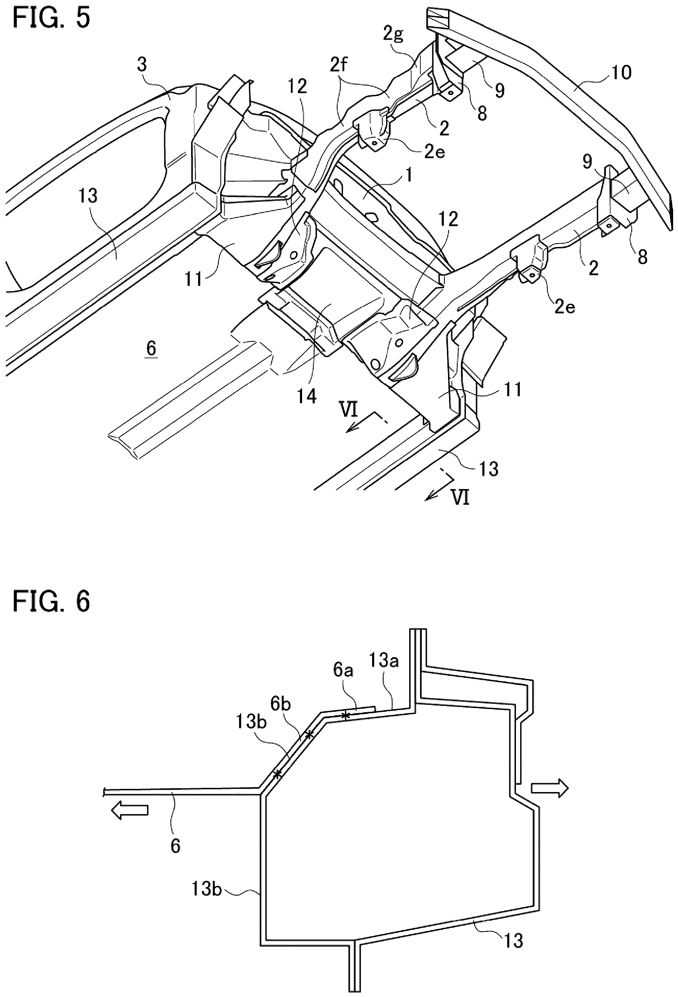

As shown in Fig. 1, a side member 2 extends forward from a lower portion of a bulkhead 1, which separates the motor compartment from a passenger compartment. A height of the side member 2 gradually increases toward its rear end, and the rear end of the side member 2 extends under a bottom face of a floor panel 6 of the passenger compartment (see Figs. 3 and 5). The side member 2 has a vertically rectangular closed cross-section. As described later, a horizontal width of the closed section varies along the length of the side member.

The hood ridge member 4 extends forward from an upper portion of the bulkhead 1, more specifically, from a joint portion of the upper portion of the bulkhead 1 and an A-pillar 3. That is, the hood ridge member 4 extends forward above the side member 2 so as to be parallel to the side member 2. In a plan view, however, the hood ridge member 4 is located laterally outward from the side member. The hood ridge member 4 has a horizontally rectangular closed cross-section. However, a height of the hood ridge member 4 gradually increases toward a lower portion of the A-pillar 3 (bulkhead 1), so that the closed section of the hood ridge member 4 becomes a vertically-elongated closed section at its rear portion.

A joint member 5 extends diagonally downward from the front end of the hood ridge member 4. However, a portion of the joint member 5 near its end extends vertically. In other words, the hood ridge member 4 and the joint member 5 are continuously formed. As described later in detail, the end of the joint member 5 is joined to a side face of the side member 2, and the hood ridge member 4 and the side member 2 are connected with each other by the joint member 5. Similarly to the hood ridge member 4, the joint member 5 also has a horizontally rectangular closed section basically. However, as described later in detail, the closed cross-section of the vertical portion near its end is slightly different. That is, the hood ridge member 4 and the joint member 5 are located on a laterally outer side of the side member 2 so as to surround an upper portion of a front wheel.

Note that, as shown by two dotted lines in Fig. 1, an extension member 15, which has a hat-shaped cross-section and extends to a radiator core support upper member (not shown in the drawings) that supports a radiator, is also joined to the front end of the hood ridge member 4. The side member 2, the hood ridge member 4, and the joint member 5 are formed by welding press-formed steel plates to have the closed cross-sections as described above. The side member 2, the hood ridge member 4, and the joint member 5 are main members that ensure vehicle body rigidity and receive an impact load during a frontal collision of the vehicle. These members function as load paths that transfer the impact load. In addition, these members absorb the collision energy through their own collapsing while transmitting the impact load in a case where the impact load is large.

A strut tower 7 is also provided to connect a rear section 2c of the side member 2 to the hood ridge member 4. A crash box 9 is attached to the front end of the side member 2 with a plate member 8 interposed therebetween. A bumper reinforcement 10 is attached to the left and right crash boxes 9 to connect them. The cash box 9 is made to collapse more easily than the side member 2, so that only the crash box 9 collapses to prevent deformation of the side member 2 in a case where the impact load is small. In other words, in a case where the impact load is small, repairing can be done only by replacing the crash box 9 (and the bumper reinforcement 10).

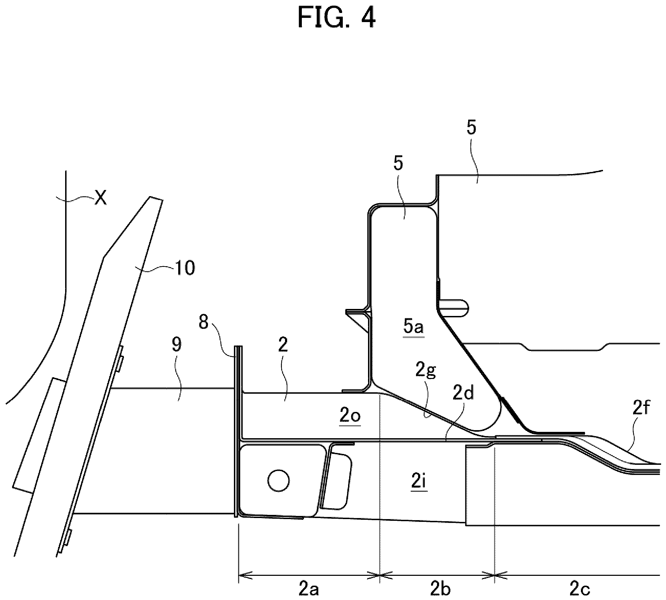

As shown in a bottom view in Fig. 4, the side member 2 has a front section 2a, a transitional section 2b, and the rear section 2c from its front in this order. Since the side member 2 has a closed cross-section as described above, the front section 2a, the transitional section 2b, and the rear section 2c also have closed cross-sections, respectively. The front section 2a is provided at a predetermined length range from the front end of the side member 2 and has a constant first horizontal width. The rear section 2c is provided behind the front section 2a and has a second horizontal width smaller than the first horizontal width of the front section 2a. The transitional section 2b is provided between the front section 2a and the rear section 2c, and its horizontal width gradually changes from the first horizontal width to the second horizontal width.

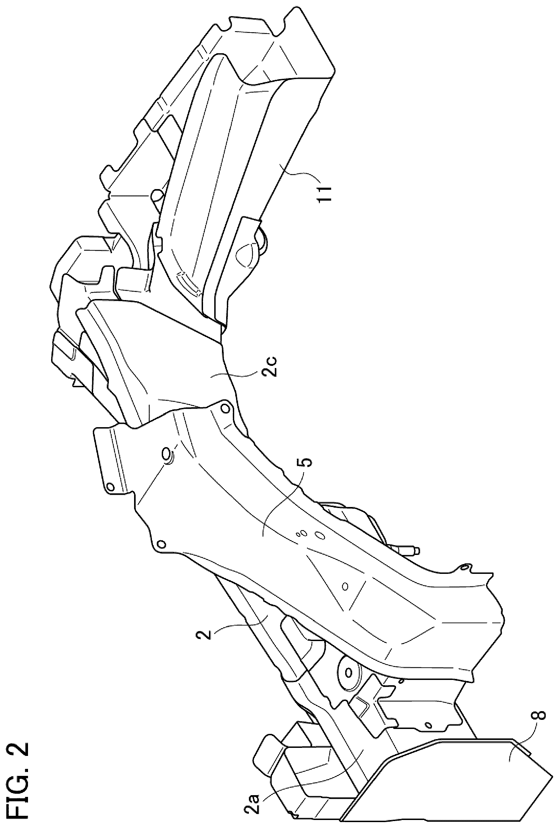

The side member 2 is formed by an inner panel 2i and an outer panel 2o welded together with flanges formed on their upper and lower edges. This welded flange 2d is shown in Fig. 4. The horizontal width of the transitional section 2b gradually changes such that the outer panel 2o gradually expands laterally outward toward the front. Note that a mounting bracket 2e for a subframe to which suspension is attached is joined to a bottom face of the rear section 2c, and a depressed portion 2f is also formed on an outer side face of the rear section 2c to avoid interference with a steered tire (see Fig. 2 to 5). An inclined face 2g directed laterally outward and rearward is formed on the outer side face of the transitional section 2b.

A vertically extending portion of the joint member 5 is joined to the side member 2 at the inclined face 2g of the transitional section 2b. More particularly, the joint member 5 is joined to the side member 2 with the surface of the joint member 5 in planar-contact with the inclined face 2g. As shown in Fig. 4, the vertically extending portion of the joint member 5 has a closed cross-section formed by obliquely expanding the above-described horizontal rectangular cross-section inward and rearward. An inclined portion of this portion expanded inward and rearward is in planar-contact with the inclined face 2g of the transitional section 2b.

Note that the crash box 9 also has a closed cross-section in the present embodiment and a shape of the closed cross-section is the same as a shape of the closed cross-section of the front section 2a of the side member 2. The crash box 9 is joined to the front section 2a via the plate member 8 without any horizontal and vertical misalignment. Therefore, the impact load is efficiently transmitted from the crash box 9 to the front section 2a of the side member 2 via the plate member 8.

As shown in Figs. 1 to 3, at a joint portion of the side member 2 and the joint member 5 in the transitional section 2b, the side member 2 extends in a front-back direction of the vehicle body and the joint member 5 extends in a vertical direction. As shown in Fig. 4, the end of the joint member 5 is not open downward, but is closed with a bottom plate 5a attached.

In a small overlap collision, only one of the above-mentioned structures constructed symmetrically on the left and right sides of the front section of the vehicle body receives an impact load. As shown in Fig. 4, an obstacle X moves rearward relative to the vehicle body, and the impact load is first input to the bumper reinforcement 10 and the crash box 9. The crash box 9 collapses and the impact load is transferred to the front section 2a of the side member 2. In the transitional section 2b, the impact load is further transferred to the load path toward the rear section 2c and to the load path toward the joint member 5.

That is, it is possible to compete with the impact load effectively by the load path of the side member 2 and the load path of the joint member 5 and the hood ridge member 4. In the present embodiment, the impact load is securely received at the front section 2a of the side member 2 and then divaricated into the two load paths at the transitional section 2b. Therefore, it becomes possible to compete with the impact load surely by the two load paths. Since the front section of the vehicle body can effectively compete with the impact load and efficiency of absorbing the collision energy at the front section of the vehicle body can be improved, reinforcing of the passenger compartment can also be reduced.

With respect to divaricating of the load path at the transitional section 2b, the impact load is surely transmitted, on the load path of the side member 2, by the front section 2a, the transitional section 2b and the rear section 2c, whose horizontal widths are progressively made smaller. In a case where the side member 2 collapses due to the impact load, it collapses horizontally due to its vertically-elongated closed cross-section. On the other hand, on the load path of the joint member 5 and the hood ridge member 4, the impact load is surely transmitted from the transitional section 2b to the joint member 5 by the inclined face 2g directed laterally outward and rearward. In a case where the joint member 5 and the hood ridge member 4 collapse due to the impact load, they collapse vertically due to their horizontally-elongated closed cross-sections.

Here, the side member 2 extends in the front-back direction of the vehicle body and the joint member 5 extends in the vertical direction in the transitional section 2b. The side member 2 extending in the front-rear direction can efficiently receive the impact load by its straight load path. The vertically extending joint member 5 can increase its contact area with the inclined face 2g of the transitional section 2b to improve transmission efficiency of the impact load. The length of the joint member 5 in the front-back direction can be shorten by extending the joint member 5 vertically, and thereby a front overhang can be prevented from being large.

In the transmission of the impact load from the transitional section 2b to the end of the joint member 5 extending vertically, the transmission efficiency may reduce, if the closed cross-section of the joint member 5 collapses. The above-described bottom plate 5a prevents the closed cross-section of the joint member 5 from collapsing. If the impact load is so large that the entire vehicle body structure on a forward side from the transitional section 2b is collapsed, the vertically extending portion of the joint member 5, in addition to the side member 2 (the transitional section 2b and the rear section 2c), can also efficiently receive the impact load. Also in this case, the two load paths remain effective.

The above-described advantages can be obtained not only in a small overlap collision, but also in a full-wrap frontal collision, where the impact load can be received by both of the above-described structures constructed symmetrically on the left and right sides of the vehicle body. However, the above-described structure can effectively compete with the impact load with the two load paths in a small overlap collision only on one of the left and right sides of the vehicle body.

Next, further features of the vehicle body structure according to the present embodiment will be explained with reference to Fig. 5. In the present embodiment, a gusset plate 12 is provided in addition to an outrigger 11 at a joint portion of the side member 2 with the bulkhead 1 and the floor panel 6. The outrigger 11 is joined to the bottom face of the floor panel 6 to connect the rear end of the side member 2 to a side sill 13. The load path of the side member 2 is extended to the side sill 13 by the outrigger 11. The gusset plate 12 is joined to the bottom face of the floor panel 6 on the opposite side to the side sill 13 with respect to the rear end of the side member 2 to connect the rear end of the side member 2 to the floor panel 6.

The vehicle in the present embodiment is an HEV as described above, and a relatively-small center tunnel 14 is formed in the center of a front end of the floor panel 6. Exhaust pipes extending from the internal combustion engine in the motor compartment and cables electrically connecting the motor generators and other components in the motor compartment to a battery pack (not shown in the drawings) mounted below the floor panel 6 are housed in the center tunnel 14. The gusset plate 12 is joined between this center tunnel 14 and the rear end of the side member 2.

The outrigger 11 has an approximately right-angled trapezoidal shape in its bottom view and are joined to the bottom face of the floor panel 6 to form a closed cross-section with the floor panel 6. A rear edge of the outrigger 11 is joined to the bottom face of the floor panel 6. An inclined front edge of the outrigger 11 is raised upward and then joined to a lower edge of the bulkhead 1. An inner edge of the outrigger 11 is joined to a bottom face and an outer side face of the rear end of the side member 2. An outer end of the outrigger 11 is joined to an inner side face of a forefront end of the side sill 13.

The gusset plate 12 also has an approximately right-angled trapezoidal shape that is almost symmetrical with the shape of the outrigger 11 in its bottom view, and is joined to the bottom face of the floor panel 6 to form a closed section with the floor panel 6. A rear edge of the gusset plate 12 is joined to the bottom face of the floor panel 6. An inclined front edge of the gusset plate 12 is joined to the lower edge of the bulkhead 1 and the inner side face of the side member 2. An inner edge of the gusset plate 12 is joined to the floor panel 6 along the center tunnel 14. An outer edge of the gusset plate 12 is joined to the bottom face of the side member 2.

The rear end of the side member 2 is firmly joined to the vehicle body from both sides by the outrigger 11 and the gusset plate 12. Therefore, the side member 2 is not needed to be extended onto the bottom face of the floor panel 6, and thus the bottom face of the floor panel 6 can be made nearly flat. As a result, the battery pack can be easily mounted below the floor panel 6 and a capacity of the battery pack can be prevented from being reduced. In addition, since the outrigger 11 and the gusset plate 12 provide reinforcement on the bottom face of the floor panel 6, reinforcement in the passenger compartment is unnecessary or minimized and thus a volume of the passenger compartment can be prevented from being reduced.

The impact load transmitted by the side member 2 is further transmitted to the side sill 13 by the outrigger 11 and to the floor panel 6 by the outrigger 11 and the gusset plate 12. Therefore, it becomes possible to effectively compete with the impact load. When the impact load is transmitted to the floor panel 6, the front edges of the outrigger 11 and the gusset plate 12 are arranged so that they spread rearward, and thereby it becomes possible to distribute the impact load adequately. In addition, since the rear end of the side member 2 is firmly sustained by the outrigger 11 and the gusset plate 12, the impact load can surely collapse the front portion of the side member 2 to reliably absorb the collision energy.

Next, further features of the vehicle body structure according to the present embodiment will be explained with reference to Fig. 6. During a small overlap collision, only one of the above-described structures symmetrically constructed on the left and right sides of the front of the vehicle body receives an impact load as described above. If the impact load is large, the front section of the vehicle body cannot absorb all the collision energy, and thus the impact load may be also input to the front end of the side sill 13. The above-mentioned impact load from the outrigger 11 and a load due to contact with the front wheel moved rearward relative to the vehicle body by the collision are input to the front end of the side sill 13.

When the above-mentioned impact loads are input to the front end of the side sill 13, a load acts on the side sill 13 to bend it outward. In other words, the loads act to pull the side sill 13 laterally outward away from the floor panel 6. In the present embodiment, a structure that can effectively resist this laterally outward load is also constructed. Fig. 6 is a cross-sectional view taken along a line VI-VI in Fig. 5. As shown in Fig. 6, the floor panel 6 is welded (spot welded or line welded) to an upper face and an inner side face of the side sill 13. The positions indicated by * in Fig. 6 are the welding positions. Shear strength (strength in an in-plane direction of a joint plane) of a welded portion where steel plates in planar-contact with each other is higher than peel strength (strength in a direction perpendicular to the joint plane), although it depends on grade of the steel plates.

Therefore, the floor panel 6 is welded not only to the side face 13b of the side sill 13 but also to the upper face 13a thereof in the present embodiment. In the present embodiment, the floor panel 6 is welded to the upper face 13a of the side sill 13 at one position and to the side face 13b of the side sill 13 at two positions on the cross-section shown in Fig. 6. The upper face 13a of the side sill 13 is nearly horizontal, and the above-mentioned load that pulls the side sill 13 laterally outward away from the floor panel 6 acts, as a shear load, on the welded portion on the floor panel 6 joined with the upper face 13a. On the other hand, the above-mentioned load that pulls the side sill 13 laterally outward away from the floor panel 6 acts, as a peel load, on the welded portion on the floor panel 6 joined with the side face 13b of the side sill 13.

Thus, by welding the floor panel 6 to both the upper face 13a and the side face 13b of the side sill 13, it becomes possible to compete with the load that would separate the side sill 13 laterally outward. In other words, the joint portion between the floor panel 6 and the side sill 13 can effectively resist both shear and delamination. A first plate 6a of the floor panel 6 that is welded to the upper face 13a and a second plate 6b of the floor panel 6 that is welded to the side face 13b also reinforce the side sill 13 as an angled reinforcing member, and thus the rigidity of the vehicle body can be also improved.

According to the vehicle body structure of the present invention, the vehicle body structure includes the side member 2, the hood ridge member 4, and the joint member 5 that are described above and each of which has a closed section. The side member 2 has a front section 2a having a constant first horizontal width, a rear section 2c having a second horizontal width smaller than the first horizontal width, and a transitional section 2b between the front section 2a and the rear section 2c whose horizontal width gradually changes from the first horizontal width to the second horizontal width. The front end of the joint member 5 is joined to the side member 2 at the inclined face 2g of the transitional section 2b that is directed laterally outward and rearward.

Therefore, the impact load (especially in a small overlap collision) is reliably transferred through the front section 2a of side member 2 to both the load path to the rear section 2c of the side member 2 and to the load path of the joint member 5 and the hood ridge member 4 at the transitional section 2b. Since the load path is divaricated behind the front section 2a, it is not transmitted to only one of the load path to the rear section 2c of the side member 2 and the load path of the joint member 5 and the hood ridge member 4. Therefore, the impact load (especially in a small overlap collision) can be divaricated appropriately and thus the two load paths can effectively compete with the impact load.

Here, according to the vehicle body structure of the present invention, at the joint portion of the side member 2 and the joint member 5 in the transitional section 2b, the side member 2 extends in the front-back direction of the vehicle body and the joint member 5 extends in the vertical direction. The side member 2 extending in the front-rear direction can efficiently receive the impact load due to its straight load path. The joint member 5 extending vertically increases its contact area with the inclined face 2g of the transitional section 2b to improve transmission efficiency of the impact load. In addition, the length of the joint member 5 in the front-back direction can be shortened by extending the joint member 5 vertically, and thereby a front overhang can be prevented from being large.

And, the vehicle body structure of the present invention further includes the outrigger 11 and the gusset plate 12 described above. Therefore, the rear end of the side member 2 is firmly joined to the vehicle body from both sides by the outrigger 11 and the gusset plate 12. Therefore, it is no longer necessary to extend the side member 2 beneath the bottom face of the floor panel 6, and thus the bottom face of the floor panel 6 can be made nearly flat. In addition, since the outrigger 11 and the gusset plate 12 provides reinforcement on the bottom face of the floor panel 6, reinforcement in the passenger compartment is unnecessary or minimized and thus the volume of the passenger compartment can be prevented from being reduced.

Furthermore, according to the vehicle body structure of the present invention, the floor panel 6 is welded to both the upper face 13a and the side face 13b of the side sill 13. Therefore, it becomes possible to effectively compete with the load (especially in a small overlap collision) that would separate the side sill 13 laterally outward. In addition, since the joint portion of the floor panel 6 with the side sill 13 reinforces the side sill 13 as an angled reinforcing member, the rigidity of the vehicle body can be also improved.

### REFERENCE SIGNS LIST

- 1: bulkhead
- 2: side member
- 2a: front section (of the side member 2)
- 2b: transitional section (of the side member 2)
- 2c: rear section (of the side member 2)
- 2g: inclined face (of the transitional section 2b)
- 3: A-pillar
- 4: hood ridge member
- 5: joint member
- 6: floor panel
- 11: outrigger
- 12: gusset plate
- 13: side sill
- 13a: upper face (of the side sill 13)
- 13b: side face (of the side sill 13)

## Claims

1. A vehicle body structure comprising:
a side member that extends forward from a lower portion of a bulkhead, which separates a front section of a vehicle body from a passenger compartment, and has a closed cross-section;
a hood ridge member that extends from a joint portion of an upper portion of the bulkhead and an A-pillar and has a closed cross-section; and
a joint member that extends downward from a front end of the hood ridge member and has a closed cross-section,
wherein the side member includes a front section that is provided at a predetermined length range from a front end thereof and has a constant first horizontal width, a rear section that is provided behind the front section and has a second horizontal width smaller than the first horizontal width, and a transitional section that is provided between the front section and the rear section and whose horizontal width gradually changes from the first horizontal width to the second horizontal width,
wherein an inclined face directed laterally outward and rearward is formed on an outer side face of the transitional section, and
wherein a front end of the joint member is joined to the side member at the inclined face of the transitional section.

2. The vehicle body structure, according to claim 1,
wherein, at a joint portion of the side member and the joint member in the transitional section, the side member extends in a front-back direction of the vehicle body and the joint member extends in a vertical direction.

3. The vehicle body structure, according to claim 1 or 2, further comprising
an outrigger joined to a bottom face of a floor panel of the passenger compartment to connect a rear end of the side member to a side sill, and
a gusset plate joined to the bottom face of the floor panel on an opposite side to the side sill with respect to the rear end of the side member to connect the rear end to the floor panel.

4. The vehicle body structure, according to claim 3,
wherein the floor panel is welded to both an upper face and a side face of the side sill.
